# EUROPÄISCHE PATENTSCHRIFT

(11) **EP 3 566 864 B1**
(45) Veröffentlichungstag und Bekanntmachung des Hinweises auf die Patenterteilung: **09.12.2020**
(21) Anmeldenummer: 19168477.8
(22) Anmeldetag: 10.04.2019
(51) Int. Cl.: B32B 7/12, B32B 5/02, B32B 5/04, B32B 27/12, B32B 27/30, B32B 27/32

(54) **VERPACKUNGSMATERIAL UND VERFAHREN ZU DESSEN HERSTELLUNG**
PACKAGING MATERIAL AND METHOD OF MANUFACTURING SAME
MATÉRIAU D'EMBALLAGE ET SON PROCÉDÉ DE FABRICATION

(30) Priorität: 09.05.2018 DE 102018111118
(43) Veröffentlichungstag der Anmeldung: 13.11.2019
(73) Patentinhaber: Karatzis S.A. Industrial & Hotelier Enterprises, 70010 Heraklion (GR)
(72) Erfinder: Karatzis, Antonios, 714 09 Heraklion (GR)
(74) Vertreter: Karakatsanis, Georgios

(56) Entgegenhaltungen:
- WO-A1-2017/080609
- CN-U- 203 530 205
- DE-U1- 29 717 310
- US-A- 3 758 371

## Beschreibung

Die Erfindung betrifft ein Verpackungsmaterial gemäß dem Oberbegriff des Patentanspruchs 1. Ferner betrifft die Erfindung ein Verfahren zur Herstellung des erfindungsgemäßen Verpackungsmaterials.

Aus der WO 2017/080609 der Anmelderin ist ein Verpackungsmaterial mit einer ersten Folie und einem Gewebe, die übereinander angeordnet und miteinander verbunden sind, bekannt. Hierbei weist die erste Folie erste Bereiche, in denen die erste Folie lokal gedehnt ist, und zweite Bereiche auf, in denen die erste Folie nicht lokal gedehnt ist; die ersten Bereiche sind jeweils zwischen zwei zweiten Bereichen angeordnet und verlaufen in einer ersten Richtung, wobei das Gewebe einen Faden umfasst und wobei ein Teil des Fadens in einer Richtung verläuft, die die erste Richtung schneidet.

Das bekannte Verpackungsmaterial kann jedoch in nachteiliger Weise bei bestimmten Anwendungen, bei denen schwere Güter verpackt werden sollen, aufgrund der unterschiedlichen hohen Zugspannung zwischen der Folie und den Gewebe an bestimmten Stellen reißen.

Derartige Verpackungsmaterialien werden zum Verpacken von Paletten, landwirtschaftlichen Produkten, Müll etc. verwendet, so dass eine hohe Reißfestigkeit sowie Schutz vor Wettereinflüssen erforderlich ist. Ferner sollen derartige Verpackungsmaterialien so wenig Kunststoff wie möglich enthalten, was zum einen die Umweltbelastung reduziert und zum anderen in günstigeren Preisen für die Verbraucher resultiert.

Aus der DE 297 17 310 U1 geht eine Verpackungsfolie für Lebensmittel, insbesondere Fleisch-, Wurst- oder Fischprodukte hervor, wobei die Folie für den Verzehr geeignet ist und zur Erhöhung der Reißfestigkeit ein Netz an der Folie anliegt; hierbei sind die Folie und das Netz durch einen lebensmittelrechtlich unbedenklichen Klebstoff miteinander lösbar verbunden.

Aus der CN 203 530 205 U geht ein Korrosionsschutzklebeband für viskoelastische Körper hervor, welches einen Klebebandhauptkörper mit einer mehrschichtigen Verbundstruktur aufweist, wobei die Verbundstruktur nacheinander eine Polypropylenfilmmaterialschicht, eine erste viskoelastische Körperleimschicht, ein kunststoffverstärkendes Formnetz, eine zweite viskoelastische Körperklebstoffschicht und einen Polyesterfreisetzungsfilm umfasst.

Ferner geht aus der US 2 758 371 A ein Laminatmaterial hervor, umfassend:
eine extrudierte und expandierte thermoplastische Polystyrolschaum-Netzschicht mit einer Dichte von etwa 0,5 bis 1,0 Pfund pro Kubikfuß und bestehend aus mindestens zweimal nachexpandierten Netzsträngen und Netzschnittpunkten, wobei die Stränge und Schnittpunkte aufgrund der Mehrfachausdehnung im Allgemeinen abgerundete Oberflächenabschnitte aufweisen; und eine dünne kontinuierliche Folie aus vorgeformtem heißversiegelbarem Polyethylenfilm, der dauerhaft mit den abgerundeten Oberflächenabschnitten der Stränge und Schnittpunkte der thermoplastischen Polystyrolschaumnetzschicht verbunden ist.

Der vorliegenden Erfindung liegt die Aufgabe zugrunde, ein Verpackungsmaterial mit geringem Gewicht bezogen auf dessen Dimensionierung und hoher Reißfestigkeit bei hohen Zugspannungen anzugeben. Des Weiteren soll ein Verfahren zur Herstellung des erfindungsgemäßen Verpackungsmaterials angegeben werden.

Diese Aufgabe wird durch die Merkmale des Patentanspruchs 1 gelöst. Ein Verfahren zur Herstellung des erfindungsgemäßen Verpackungsmaterials ist Gegenstand des Patentanspruchs 8. Weitere erfindungsgemäße Ausgestaltungen und Vorteile gehen aus den entsprechenden Unteransprüchen hervor.

Demnach wird ein Verpackungsmaterial vorgeschlagen, welches eine vorgedehnte und wärmestabilisierte elastische Folie und ein flach auf der Folie angeordnetes elastisches Kunststoffnetz, insbesondere ein als elastisches Raschelnetz ausgeführtes Kunststoffnetz umfasst, wobei das Kunststoffnetz mit der Folie mittels einer auf der Folie aufgetragenen Klebstoffschicht verbunden ist, derart, dass bei hohen Zugspannungen eine Relativbewegung der Folie und des Kunststoffnetzes zueinander ermöglicht wird.

Durch das Vordehnen der elastischen Folie wird das Verpackungsmaterial in vorteilhafter Weise dünner und auf eine vorgegebene Länge bezogen leichter, wobei die Wärmestabilisierung der vorgedehnten Folie dazu führt, dass die Folie keine bleibenden Oberflächenspannungen aufweist. Durch die erfindungsgemäße Konzeption können lokale Überspannungen, die an verschiedenen Stellen des

Verpackungsmaterials entstehen, durch eine relative Bewegung des Netzes und der Folie zueinander bei hohen Zugspannungen gleichmäßig verteilt werden, so dass in vorteilhafter Weise ein Reißen des Verpackungsmaterials vermieden wird. Dies wird dadurch ermöglicht, dass der Klebstoff ein wasserlöslicher Klebstoff, beispielsweise ein lebensmitteltauglicher Klebstoff ist, welcher eine niedrige Klebekraft aufweist.

Ferner kann durch das Vermeiden lokaler Überspannungen das Verpackungsmaterial um leichte und dünne Wickelhülsen anstelle von schweren Wickelzylindern aus Presspappe gewickelt werden.

Zur Herstellung des erfindungsgemäßen Verpackungsmaterials wird die elastische Folie bis zu einem definierten, vorgegebenen Grad vorgedehnt und anschließend wärmestabilisiert, wobei anschließend auf die vorgedehnte Folie eine Klebstoffschicht des wasserlöslichen Klebstoffs niedriger Klebekraft, beispielsweise mittels Zylinderachsen oder Hochdruckdüsen aufgetragen wird. Nach dem Vordehnen der Folie weist diese vorzugsweise eine Restelastizität von mindestens 20% auf.

In einem nächsten Schritt werden die Folie und ein Kunststoffnetz mittels Walzen zusammengepresst, so dass ein Verpackungsmaterial entsteht, dessen eine Seite als selbstklebende, von einem Kunststoffnetz bedeckte Folie ohne Einschnürungsstellen ausgeführt ist. Durch die selbstklebende Ausführung entsteht zudem der Vorteil, dass ein Verschließen des Verpackungsmaterials nach der Aufnahme der Güter vereinfacht wird.

Die elastische Folie kann beispielsweise bis auf eine Dicke von 5 µm vorgedehnt werden, wobei die Breite beliebig sein kann, und beispielsweise in einem Intervall zwischen 40 cm und 380 cm liegen kann. Die elastische Folie kann aus LLDPE (lineares Polyethylen mit geringer Dichte), LDPE (Polyethylen mit geringer Dichte), HDPE (Polyethylen mit hoher Dichte), VC (Polyvinylchlorid), EVA (Ethylenvinylacetat) oder aus einem ähnlichen Kunststoff, insbesondere aus jedem Polyolefin hergestellt sein oder dieses aufweisen.

Das Kunststoffnetz kann aus Polyolefinen wie beispielsweise LLDPE (lineares Polyethylen mit geringer Dichte), LDPE (Polyethylen mit geringer Dichte), HDPE (Polyethylen mit hoher Dichte), PVC (Polyvinylchlorid), EVA (Ethylenvinylacetat) oder aus einem ähnlichen Kunststoff hergestellt sein oder diesen aufweisen. Dessen Gewicht kann beispielsweise 2 bis 32 g/laufender Meter betragen, wobei die Netzdichte beispielsweise in einem Intervall zwischen 6 Nadeln /Zoll bis 2 Zoll Nadelabstand liegen kann. Die Breite des Netzes entspricht im Wesentlichen der Breite der elastischen Folie.

Das Netz kann aus sich in Fließrichtung des Netzes erstreckenden Fransen (auch Kettfäden genannt) und Schussfäden, die die Fransen unter Ausbildung eines Zick-Zack-Musters zu einem Netz verbinden, bestehen, die nach dem Stand der Technik untereinander verwebt sind, wobei die Fransen jeweils aus einem Faden gebildet sind. Ferner kann vorgesehen sein, dass sämtliche oder ein Teil der Fransen, insbesondere die äußeren Fransen zur Erhöhung der Festigkeit jeweils aus zwei oder mehreren Fäden gebildet sind.

Der Abstand zwischen den Fransen kann beliebig sein und beispielsweise in einem Bereich zwischen 4,2 und 50,8 mm liegen. Die für die Fransen verwendeten Kunststofffäden können eine Dicke von 10 - 60 Mikrometer oder weniger aufweisen.

Ferner können zumindest die äußeren oder beliebige Fransen zur Erhöhung der Festigkeit jeweils zwei oder mehrere Teilfransen umfassen, die mittels zumindest eines in Zick-Zack Form verlaufenden Schussfadens derart miteinander verbunden sind, dass die Teilfransen unmittelbar benachbart parallel zueinander verlaufen. Bei Fransen umfassend zwei Teilfransen werden die Teilfransen mittels zumindest eines Schussfadens paarweise miteinander verknüpft.

Die Erfindung wird im Folgenden anhand der beigefügten Figuren beispielhaft näher erläutert. Es zeigen:
Figur 1a: Eine schematische Schnittansicht eines gemäß einer ersten Ausgestaltung der Erfindung ausgeführten Verpackungsmaterials;
Figur 1b: Eine schematische Draufsicht des Verpackungsmaterials nach Figur 1a;
Figur 2: Eine Detailansicht aus Figur 1b;
Figur 3a: Eine schematische Schnittansicht eines gemäß einer zweiten Ausgestaltung der Erfindung ausgeführten Verpackungsmaterials;
Figur 3b: Eine schematische Draufsicht des Verpackungsmaterials nach Figur 3a; und

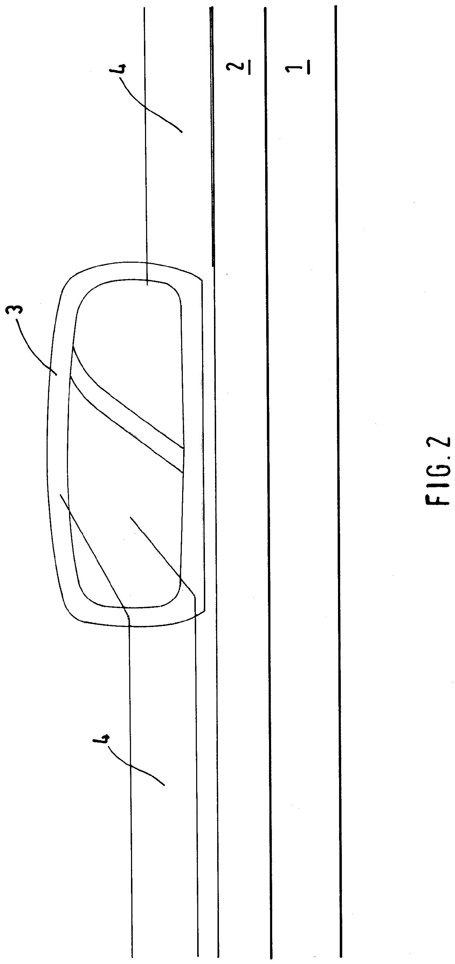

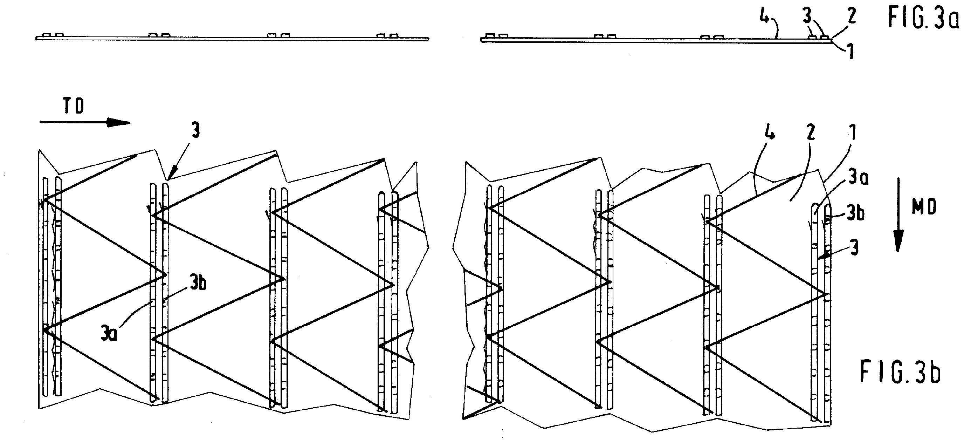

Figur 2: Eine Detailansicht aus Figur 3b.

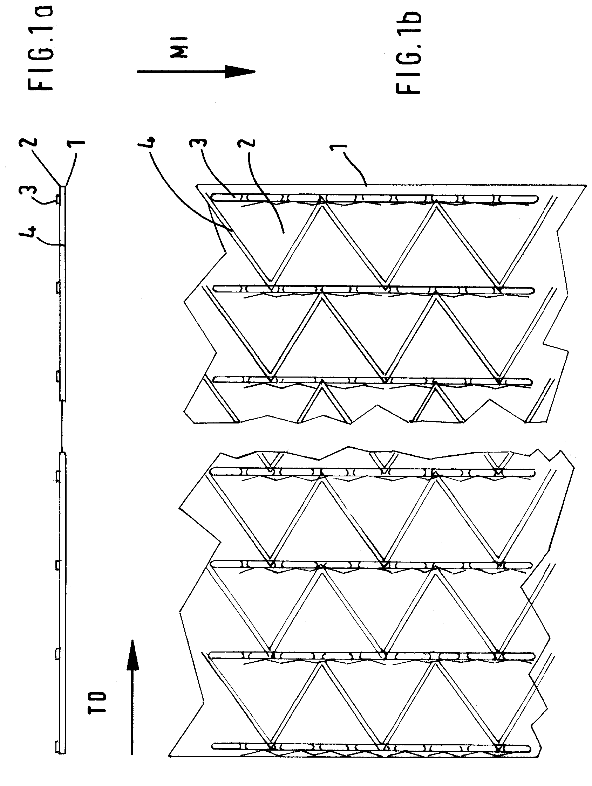

In Figuren 1b und 2b wird mit MD die Maschinenrichtung, nämlich die Fließrichtung des Kunststoffnetzes bei der Herstellung bzw. des Verpackungsmaterials beim Abwickeln; mit TD die Transversalrichtung, nämlich die Richtung senkrecht zur Maschinenrichtung bzw. Fließrichtung bezeichnet.

Gemäß der Erfindung und bezugnehmend auf das Ausführungsbeispiel nach Figuren 1a und 1b umfasst das Verpackungsmaterial eine vorgedehnte und wärmestabilisierte elastische Folie 1 und ein flach auf der Folie 1 angeordnetes elastisches Kunststoffnetz im Wesentlichen gleicher Breite, welches mit der Folie 1 mittels einer auf der Folie 1 aufgetragenen Klebstoffschicht 2 derart verbunden ist, dass bei hohen Zugspannungen eine Relativbewegung der Folie 1 und des Kunststoffnetzes zueinander ermöglicht wird. Hierbei bleibt das Kunststoffnetz ständig in Kontakt mit der Klebstoffschicht 2.

Das auf der Folie 1 angeordnete und mit der Folie 1 verbundene Kunststoffnetz kann als Raschelnetz nach dem Stand der Technik ausgeführt sein, umfassend sich in Fließrichtung des Netzes erstreckenden Fransen 3 und Schussfäden 4, die die Fransen unter Ausbildung eines Zick-Zack-Musters zu einem Netz verbinden. Der Abstand zwischen benachbarten Fransen 3 kann beispielsweise in einem Bereich zwischen 4,2 Millimeter und 50,8 Millimeter liegen.

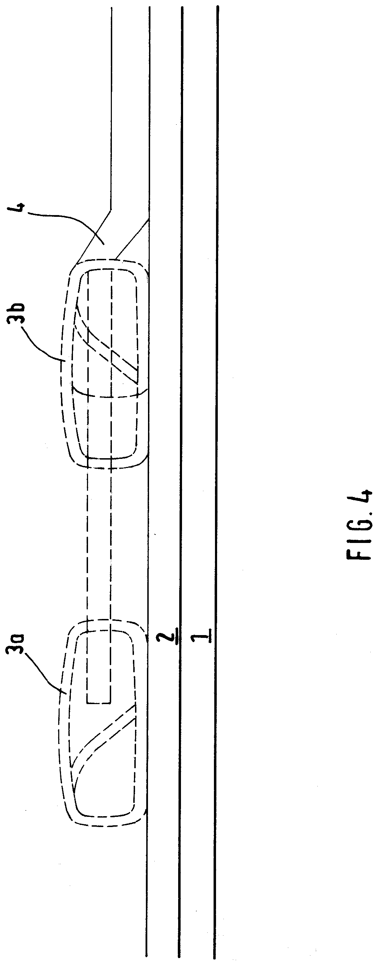

Das in Figuren 3a, 3b und 4 gezeigte Ausführungsbeispiel unterscheidet sich vom Ausführungsbeispiel nach Figuren 1a, 1b und 2 dadurch, dass sämtliche Fransen 3 zur Erhöhung der Festigkeit jeweils zwei Teilfransen 3a und 3b umfassen, die mittels eines in Zick-Zack Form verlaufenden Schussfadens 4 derart miteinander verbunden sind, dass die Teilfransen 3a, 3b unmittelbar benachbart parallel zueinander verlaufen. Der Abstand zwischen den Teilfransen 3a, 3b einer Franse 3, d.h. der Abstand zwischen den virtuellen Mittellängslinien der Teilfransen zueinander kann z.B. in einem Bereich zwischen 2 Millimeter und 10 Millimeter, vorzugsweise in einem Bereich zwischen 2 Millimeter und 5 Millimeter liegen. Bei derartig geringen Abständen können sich die Teilfransen 3a, 3b berühren.

Das Kunststoffnetz kann mittels einer Raschelmaschine hergestellt werden, welche jeweils wenigstens zwei Lochnadeln zum Führen jeweils eines Kunststofffadens zum Stricken jeweils einer Franse aufweist, wobei die jeweils zwei Lochnadeln von einem gemeinsamen Lochnadel-Träger getragen werden und wobei den jeweils zwei Lochnadeln zwei von einem gemeinsamen Nadelträger getragenen Nadeln zugeordnet sein können. Hierbei kann der Abstand zwischen zwei benachbarten Lochnadeln und/oder zwischen zwei direkt benachbarten Nadeln in einem Bereich zwischen 2 und 10 Millimeter, insbesondere zwischen 2 und 5 Millimetern liegen, wodurch eine einfache Fertigung der Fransen im Normalbetrieb der Raschelmaschine ermöglicht wird.

## Patentansprüche

1. Verpackungsmaterial, umfassend eine vorgedehnte und wärmestabilisierte elastische Folie (1) und ein flach auf der Folie angeordnetes elastisches Kunststoffnetz, **dadurch gekennzeichnet, dass** das Kunststoffnetz mit der Folie (1) mittels einer auf der Folie (1) aufgetragenen Klebstoffschicht verbunden ist, wobei der Klebstoff ein wasserlöslicher Klebstoff aufweisend eine niedrige Klebekraft ist, derart, dass bei hohen Zugspannungen eine Relativbewegung der Folie (1) und des Kunststoffnetzes zueinander ermöglicht wird.

2. Verpackungsmaterial nach Anspruch 1, **dadurch gekennzeichnet, dass** die elastische Folie (1) bis auf eine Dicke von 5 µm vorgedehnt sein kann und eine Restelastizität von mindestens 20% aufweist.

3. Verpackungsmaterial nach Anspruch 1, **dadurch gekennzeichnet, dass** es eine Breite von 40 cm bis 380 cm aufweist.

4. Verpackungsmaterial nach Anspruch 1, 2 oder 3, **dadurch gekennzeichnet, dass** die elastische Folie (1) aus LLDPE, LDPE, HDPE, VC, EVA oder aus einem ähnlichen Kunststoff hergestellt ist oder diesen aufweist.

5. Verpackungsmaterial nach Anspruch 1, 2, 3 oder 4, **dadurch gekennzeichnet, dass** das Kunststoffnetz aus LLDPE, LDPE, HDPE, PVC, EVA oder aus einem ähnlichen Kunststoff hergestellt ist oder diesen aufweist.

6. Verpackungsmaterial nach Anspruch 1, 2, 3, 4 oder 5, **dadurch gekennzeichnet, dass** das Kunststoffnetz aus sich in Fließrichtung des Netzes erstreckenden Fransen (3) und Schussfäden (4), welche die Fransen (3) unter Ausbildung eines Zick-Zack-Musters zu einem Netz verbinden, besteht, wobei die Fransen (3) jeweils aus einem Faden gebildet sind oder wobei sämtliche oder ein Teil der Fransen (3) zur Erhöhung der Festigkeit jeweils aus zwei oder mehreren Fäden gebildet sind.

7. Verpackungsmaterial nach Anspruch 6, **dadurch gekennzeichnet, dass** zumindest die äußeren Fransen (3) zur Erhöhung der Festigkeit jeweils zwei oder mehrere Teilfransen (3a, 3b) umfassen, die mittels zumindest eines in Zick-Zack Form verlaufenden Schussfadens (4) derart miteinander verbunden sind, dass die Teilfransen (3a, 3b) unmittelbar benachbart parallel zueinander verlaufen.

8. Verfahren zur Herstellung nach einem der vorangehenden Ansprüche ausgeführten Verpackungsmaterials, **dadurch gekennzeichnet, dass** eine elastische Folie (1) bis zu einem definierten, vorgegebenen Grad vorgedehnt und anschließend wärmestabilisiert wird, wobei anschließend auf die vorgedehnte Folie (1) eine Klebstoffschicht (2) aufgetragen wird, wobei der Klebstoff ein wasserlöslicher Klebstoff aufweisend eine niedrige Klebekraft ist, wobei in einem nächsten Schritt die Folie (1) und ein Kunststoffnetz mittels Walzen zusammengepresst werden, so dass ein Verpackungsmaterial entsteht, dessen eine Seite als selbstklebende, von einem Kunststoffnetz bedeckte Folie (1) ohne Einschnürungsstellen ausgeführt ist, wobei bei hohen Zugspannungen eine Relativbewegung der Folie (1) und des Kunststoffnetzes zueinander ermöglicht wird.

9. Verfahren nach Anspruch 8, **dadurch gekennzeichnet, dass** der Klebstoff mittels Hochdruckdüsen oder Zylinderachsen aufgetragen wird.

## Claims

1. A packaging material, comprising a pre-stretched and heat-stabilised elastic film (1) and an elastic plastic net arranged flat on the film, **characterised in that** the plastic net is connected to the film (1) by means of an adhesive layer applied on the film (1), wherein the adhesive is a water-soluble adhesive having a low adhesive strength, in such a way that a relative movement of the film (1) and the plastic net in relation to one another is permitted in the event of high tensile stresses.

2. The packaging material according to claim 1, **characterised in that** the elastic film (1) can be pre-stretched up to a thickness of 5 µm and has a residual elasticity of at least 20%.

3. The packaging material according to claim 1, **characterised in that** it has a width of 40 cm to 380 cm.

4. The packaging material according to claim 1, 2 or 3, **characterised in that** the elastic film (1) is produced from LLDPE, LDPE, HDPE, VC, EVA or from a similar plastic or comprises the latter.

5. The packaging material according to claim 1, 2, 3 or 4, **characterised in that** the plastic net is produced from LLDPE, LDPE, HDPE, PVC, EVA or from a similar plastic or comprises the latter.

6. The packaging material according to claim 1, 2, 3, 4 or 5, **characterised in that** the plastic net consists of fringes (3) extending in the flow direction of the net and weft threads (4), which connect the fringes (3) thereby forming a zigzag pattern to form a net, wherein the fringes (3) are each formed from a thread or wherein all or part of the fringes (3) are each formed from two or more threads to increase the strength.

7. The packaging material according to claim 6, **characterised in that** at least the outer fringes (3) each comprised two or more partial fringes (3a, 3b) to increase the strength, which are connected to one another by means of at least one weft thread (4) running in a zigzag manner, in such a way that the partial fringes (3a, 3b) run directly adjacent parallel to one another.

8. A method for producing packaging material executed according to any one of the preceding claims, **characterised in that** an elastic film (1) is pre-stretched to a defined, predetermined degree and then heat-stabilised, wherein an adhesive layer (2) is then applied on the pre-stretched film (1), wherein the adhesive is a water-soluble adhesive having a low adhesive strength, wherein in a subsequent step the film (1) and the plastic net are pressed together by means of rollers, so that a packaging material arises, one side of which is constituted as a self-adhesive film (1) covered by a plastic net without necking points, wherein a relative movement of the film (1) and the plastic net in relation to one another is permitted in the event of high tensile stresses.

9. The method according to claim 8, **characterised in that** the adhesive is applied by means of high-pressure jets or cylindrical axes.

## Revendications

1. Matériau d'emballage, comprenant un film (1) préétiré et thermo-stabilisé et un filet de matière plastique, élastique, placé à plat sur le film, **caractérisé en ce que** le filet de matière plastique est assemblé avec le film (1) au moyen d'une couche d'agent adhésif appliquée sur le film (1), l'agent adhésif étant un agent adhésif hydrosoluble faisant preuve d'un faible pouvoir collant, de telle sorte que sous l'effet de hautes contraintes de traction, un déplacement relatif mutuel du film (1) et du filet en matière plastique est possible.

2. Matériau d'emballage selon la revendication 1, **caractérisé en ce que** le film (1) élastique peut se préétirer jusqu'à une épaisseur de 5 µm et fait preuve d'une élasticité résiduelle d'au moins 20 %.

3. Matériau d'emballage selon la revendication 1, **caractérisé en ce qu'**il présente une largeur de 40 cm à 380 cm.

4. Matériau d'emballage selon la revendication 1, 2 ou 3, **caractérisé en ce que** le film (1) est fabriqué en LLDPE, LDPE, HDPE, VC, EVA ou en une matière plastique analogue ou comporte cette dernière.

5. Matériau d'emballage selon la revendication 1, 2, 3 ou 4, **caractérisé en ce que** le filet de matière plastique est fabriqué en LLDPE, LDPE, HDPE, VC, EVA ou en une matière plastique analogue ou comporte cette dernière.

6. Matériau d'emballage selon la revendication 1, 2, 3, 4 ou 5, **caractérisé en ce que** le filet de matière plastique est constitué de franges (3) s'étendant dans la direction du flux et de fils de trame (4), lesquels relient les franges (3) en un filet, en formant un motif en zigzags, les franges (3) étant formées chacune d'un fil, ou pour augmenter la solidité, l'ensemble ou une partie des franges (3) étant formé(e) respectivement de deux ou de plusieurs fils.

7. Matériau d'emballage selon la revendication 6, **caractérisé en ce que** pour augmenter la solidité, au moins les franges (3) extérieures comprennent respectivement deux ou plusieurs franges partielles (3a, 3b), qui au moyen d'au moins un fil de trame (4) s'écoulant en forme de zigzag sont reliées ensemble de telle sorte que les franges partielles (3a, 3b) s'écoulent en parallèle, au voisinage mutuel direct.

8. Procédé, destiné à la fabrication d'un matériau d'emballage selon l'une quelconque des revendications précédentes, **caractérisé en ce qu'**on préétire un film (1) jusqu'à un taux prescrit défini et on le thermo-stabilise par la suite, lors duquel, on applique ensuite sur le film (1) préétiré une couche d'agent adhésif (2), l'agent adhésif étant un agent adhésif hydrosoluble faisant preuve d'un faible pouvoir collant, lors duquel, dans une étape suivante, on comprime ensemble le film (1) et un filet de matière plastique au moyen de cylindres, de sorte à donner naissance à un matériau d'emballage, dont l'un des côtés est réalisé sous la forme d'un film (1) autocollant, recouvert d'un filet de matière plastique sans zone de constriction, sous l'effet d'importantes contraintes en traction, un déplacement relatif mutuel du film (1) et du filet en matière plastique étant possible.

9. Procédé selon la revendication 8, **caractérisé en ce que** l'agent adhésif est appliqué au moyen de buses haute pression ou d'axes de cylindre.
